# EUROPÄISCHE PATENTANMELDUNG

(11) **EP 4 517 461 A1**
(43) Veröffentlichungstag der Anmeldung: **05.03.2025**
(21) Anmeldenummer: 23194481.0
(22) Anmeldetag: 31.08.2023
(51) Int. Cl.: G05B 23/02

(54) **VERFAHREN ZUM BESTIMMEN EINER FEHLERURSACHE IN EINER MASCHINE MITTELS EINER ÜBERWACHUNGSVORRICHTUNG**

(71) Anmelder: Siemens Aktiengesellschaft, 80333 München (DE)
(72) Erfinder: Baudisch, Thomas, 86938 Schondorf am Ammersee (DE); Haager, Dominik, 83052 Bruckmühl (DE); Wincheringer, Christoph, 81369 München (DE)
(74) Vertreter: Siemens Patent Attorneys

(57) **Zusammenfassung**

Die Erfindung ein Verfahren zum Bestimmen einer Fehlerursache (20) in einer Maschine (10) mittels einer Überwachungsvorrichtung (12), mit den Schritten:
- Bereitstellen eines digitalen Zwillingsmodells (26) der Maschine (10) mittels einer elektronischen Recheneinrichtung (18) der Überwachungsvorrichtung (12); Bereitstellen eines Abhängigkeitsmodells (28) von jeweiligen Komponenten (22, 24) der Maschine (10) mittels der elektronischen Recheneinrichtung (18), wobei die Komponenten (20 ,22) fehleranfällig sind; Erfassen eines Messsignals (16) der Maschine (10) mittels einer Erfassungseinrichtung (14) der Überwachungsvorrichtung (12); Simulieren des digitalen Zwillingsmodells (26) mittels der elektronischen Recheneinrichtung (18) und Ausgeben eines virtuellen Messsignals (30) des digitalen Zwillingsmodells (26) mittels der elektronischen Recheneinrichtung (18); Vergleichen des Messsignals (16) mit dem virtuellen Messsignal (30) mittels der elektronischen Recheneinrichtung (18); und bei einer Abweichung des Messsignals (16) mit dem virtuellen Messsignal (30), Bestimmen der Fehlerursache (20) in Abhängigkeit von dem Abhängigkeitsmodell (28) mittels der elektronischen Recheneinrichtung (18). Ferner betrifft die Erfindung ein Computerprogrammprodukt, ein computerlesbares Speichermedium sowie eine Überwachungsvorrichtung (12).

## Beschreibung

Die Erfindung betrifft ein Verfahren zum Bestimmen einer Fehlerursache in einer Maschine mittels einer Überwachungsvorrichtung gemäß dem geltenden Patentanspruch 1. Ferner betrifft die Erfindung ein Computerprogrammprodukt, ein computerlesbares Speichermedium sowie eine Überwachungsvorrichtung.

Betrachtungsgegenstand sind vorliegend insbesondere technische Systeme, die mindestens über eine Steuerung und eine Regelstrecke bestehend aus mindestens mechanischen und elektrischen Komponenten gebildet sind, zum Beispiel Werkzeugmaschinen, Produktionsanlagen und medizintechnische Geräte. Erkennt eine Erfassungseinrichtung eines solchen Systems eine Abweichung vom geplanten Ablauf, wird zum Einen am Bedienfeld der Steuerung eine Warnung oder Fehlermeldung ausgegeben und zum Anderen reagiert zum Beispiel das System mit einem Stillstand. Die Ursachen sind vielfältig und reichen von Komponentenausfällen, über Verschleiß, zum Beispiel erhöhter Motorstrom aufgrund von erhöhter Reibung, Überschreitung der Grenzwerte eines Produkts, zum Beispiel Abmessungen, Gewicht bis hin zu Cyber-Attacken.

Problem hierbei ist, dass die Steuerung zwar eine Abweichung in bestimmten Fällen erkennen kann und dem Benutzer über das Bedienfeld auch anzeigen kann, an welcher Stelle ein Fehler erkannt wurde, die Analyse der Ursache des Fehlers bleibt jedoch Aufgabe des Experten und wird somit manuell durchgeführt.

Es herrscht somit Bedarf im Stand der Technik, dass mit Hilfe eines betriebsbegleitenden Verfahrens beziehungsweise einer Überwachungsvorrichtung automatisch eine Ursachenanalyse durchgeführt werden kann. Kann die Ursache automatisch erkannt werden, kann die Steuerung besser abgestimmt werden und auf die Abweichung reagieren.

Aufgabe der vorliegenden Erfindung ist es, ein Verfahren, ein Computerprogrammprodukt, ein computerlesbares Speichermedium sowie eine Überwachungsvorrichtung zu schaffen, mittels welchen zuverlässig eine Fehlerursache in einer Maschine bestimmt werden kann.

Diese Aufgabe wird durch ein Verfahren, ein Computerprogrammprodukt, ein computerlesbares Speichermedium sowie eine Überwachungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Fehlerursache in einer Maschine mittels einer Überwachungsvorrichtung. Es wird ein digitales Zwillingsmodells der Maschine mittels einer elektronischen Recheneinrichtung der Überwachungsvorrichtung bereitgestellt. Es wird ein Abhängigkeitsmodell von jeweiligen Komponenten der Maschine mittels der elektronischen Recheneinrichtung bereitgestellt, wobei die Komponenten fehleranfällig sind. Ein Messsignal der Maschine wird mittels einer Erfassungseinrichtung der Überwachungsvorrichtung erfasst. Das digitale Zwillingsmodell wird mittels der elektronischen Recheneinrichtung simuliert, und es wird ein virtuelles Messsignal des digitalen Zwillingsmodells mittels der elektronischen Recheneinrichtung ausgegeben. Das Messsignal wird mit dem virtuellen Messsignal verglichen mittels der elektronischen Recheneinrichtung. Bei einer Abweichung des Messsignals mit dem virtuellen Messsignal erfolgt das Bestimmen der Fehlerursache in Abhängigkeit von dem Abhängigkeitsmodell mittels der elektronischen Recheneinrichtung.

Somit ist es ermöglicht, dass zuverlässig die Fehlerursache bestimmt werden kann. Insbesondere in Abhängigkeit von dem Abhängigkeitsmodell kann somit nicht nur ein Fehler erkannt werden, sondern es kann eine Fehlersuche in Abhängigkeit des Abhängigkeitsmodells durchgeführt werden. Insbesondere sieht somit die Erfindung vor, dass parallel zum Betrieb der Maschine das digitale Zwillingsmodell in Echtzeit mitsimuliert wird. Das Messsignal beziehungsweise auch eine Vielzahl von Messsignalen der Maschine wird kontinuierlich erfasst. Das virtuelle Messsignal wird ebenfalls kontinuierlich simuliert. Es erfolgt dann auch ein kontinuierliches Vergleichen der Messsignale mit den virtuellen Messsignalen. Bei einem fehlerfreien Betrieb entspricht das virtuelle Messsignal im Wesentlichen dem Messsignal. Bei einem fehlerbehafteten Betrieb einer Komponente kann wiederum bei dem Messsignal eine entsprechende Abweichung festgestellt werden. Insbesondere da die Simulation fehlerfrei ist, kann eine Abweichung zum realen Messsignal entsprechend für einen Fehler in der Maschine sprechen. Es wird dann überprüft, welche Komponenten eine entsprechende Auswirkung auf das Messsignal haben können, insbesondere hinterlegt im Abhängigkeitsmodell. In einem nächsten Schritt erfolgt dann wiederum das Simulieren mit dem digitalen Zwillingsmodell mit der fehlerhaften Komponente gemäß dem Abhängigkeitsmodell, wobei das Simulationsmodell derart manipuliert wird, dass die jeweiligen Komponenten einen (Teil-) Defekt aufweisen. Sollte dann beispielsweise entdeckt werden, dass das virtuell erzeugte Messsignal mit der fehlerhaften Komponente dem real gemessenen Messsignal entspricht, so kann davon ausgegangen werden, dass die Komponente, welche gerade eben fehlerhaft simuliert wurde, auch die Fehlerursache ist. Somit kann zuverlässig eine Bestimmung der Fehlerursache realisiert werden.

Wie bereits erwähnt können auch mehrere Messsignale der Maschine erfasst werden und mehrere virtuelle Messsignale mittels des digitalen Zwillingsmodells erzeugt werden. Es erfolgt dann auch der Vergleich der jeweiligen Messsignale mit den virtuellen Messsignalen und die entsprechende Fehlerursachensuche. Somit können auch große Maschinen bestehend aus einer Vielzahl von Komponenten entsprechend überwacht werden.

In Abhängigkeit der Fehlerursache kann dann eine Warnmeldung für einen Nutzer erzeugt werden, oder es können Steuersignale zum Abschalten einer fehlerhaften Komponente, oder zum Reduzieren einer Leistung der Maschine, oder auch weitere Gegenmaßnahmen eingeleitet werden.

Gemäß einer vorteilhaften Ausgestaltungsform werden die Maschine und das digitale Zwillingsmodell zeitgleich und parallel zueinander betrieben. Insbesondere ist somit vorgesehen, dass beispielsweise entsprechende Steuerungen parallel sowohl in dem digitalen Zwillingsmodell als auch in der Maschine durchgeführt werden. Insbesondere findet somit eine Echtzeitsimulation der Maschine parallel zum eigentlichen Betrieb statt. Somit können zuverlässig die entsprechenden Messsignale miteinander verglichen werden und eine Echtzeitfehlerursachenbestimmung realisiert werden.

Weiterhin vorteilhaft ist, wenn für eine jeweilige Komponente zumindest ein Fehlermodell vorgegeben wird. Beispielsweise kann im Fehlermodell berücksichtigt werden, wie sich der Fehler auf das entsprechende Messsignal auswirken kann. Diese Fehlermodelle können bereits zuvor existieren oder auch dynamisch generiert werden, das heißt, dass das Simulationsmodell derart trainiert werden kann, dass es dem Komponentenausfall entspricht. Insbesondere bei einer Komponente, welche beispielsweise lediglich einen Fehlerfall oder einen fehlerfreien Zustand aufweisen kann, kann somit auf einfache Art und Weise überprüft werden, ob es sich bei der Komponente um einen Fehlerfall handelt oder nicht.

Es hat sich weiterhin als vorteilhaft erwiesen, wenn für eine jeweilige Komponente eine Vielzahl von Fehlermodellen vorgegeben wird. Beispielsweise können bei einer Pumpe unterschiedliche Drehzahlen vorgegeben werden, welche beispielsweise aufgrund von unterschiedlichen Fehlern zu verzeichnen sind. Sollte beispielsweise ein entsprechend hoher Reibverschleiß vorhanden sein, so kann eine entsprechend niedrige Drehzahl zu verzeichnen sein. Dies kann beispielsweise Auswirkungen auf einen entsprechenden Fluidfluss haben. Die Pumpe kann jedoch auch beispielsweise ein entsprechendes Loch aufweisen, und damit einen Fluidverlust verursachen, wodurch ebenfalls der Fluss reduziert werden kann. Ferner kann die Pumpe noch weitere Fehler aufweisen. Es kann somit vorgesehen sein, dass für eine Komponente unterschiedliche Fehlermodelle bereitgestellt werden. Auf Basis dessen kann dann wiederum die Vielzahl von Fehlermodellen entsprechend durchsimuliert werden, bis auf das korrekte Fehlermodell geschlossen werden kann, wodurch die Fehlerursache zuverlässig ausgefunden werden kann.

Es hat sich weiterhin als vorteilhaft erwiesen, wenn bei der Abweichung das zumindest eine Fehlermodell simuliert wird und ein davon abhängiges weiteres virtuelles Messsignal erzeugt wird und das weitere virtuelle Messsignal mit dem Messsignal verglichen wird und bei einer Übereinstimmung der Fehler auf Basis des Fehlermodells bestimmt wird. Mit anderen Worten ist vorgesehen, dass bei der Bestimmung einer Abweichung eine parallele Simulation der Maschine und des digitalen Zwillingsmodells abgebrochen wird. Das digitale Zwillingsmodell wird dann mit dem Fehlermodell der Komponente entsprechend durchsimuliert. Sollte dann das weitere virtuelle Messsignal mit dem tatsächlichen Messsignal übereinstimmen, so kann darauf geschlossen werden, dass die Simulation korrekt durchgeführt wurde und somit das korrekte Fehlermodell genutzt wurde. Damit kann zuverlässig die Fehlerursache bestimmt werden.

Eine weitere vorteilhafte Ausgestaltungsform sieht vor, dass beim Abhängigkeitsmodell Komponenten berücksichtigt werden, welche eine Auswirkung auf das Messsignal haben. Beispielsweise können beim Signal eines Fluidflusses sowohl ein Ventil als auch eine Pumpe entsprechende Auswirkungen auf den Fluidfluss haben. Somit können beim Abhängigkeitsmodell für den Fluidfluss sowohl die Komponente Pumpe als auch die Komponente Ventil als potentielle Fehlerursache bereitgestellt werden. Somit kann bei einem fehlerhaften Fluidfluss darauf geschlossen werden, dass entweder die Pumpe oder das Ventil fehlerhaft ist. Durch das Abhängigkeitsmodell können diese Auswirkungen entsprechend rekapituliert werden, wodurch zuverlässig die Fehlerursache bestimmt werden kann.

Es hat sich weiterhin als vorteilhaft erwiesen, wenn bei einer Vielzahl von Komponenten eine parallele Fehlersuche auf Basis einer parallelen Simulation durchgeführt wird. Am Beispiel der Pumpe und des Ventils kann somit vorgesehen sein, dass die Simulation gleichzeitig sowohl für eine fehlerhafte Pumpe als auch für ein fehlerhaftes Ventil durchgeführt wird. Somit kann in kürzester Zeit die Fehlerursache bestimmt werden.

Ebenfalls vorteilhaft ist, wenn bei einer Vielzahl von Komponenten eine sequentielle Fehlersuche auf Basis einer sequentiellen Simulation durchgeführt wird. Sollte beispielsweise eine reduzierte Rechenleistung der elektronischen Recheneinrichtung vorliegen, sodass eine parallele Abarbeitung der Fehlerursache nicht möglich ist, so kann auch auf eine sequentielle Fehlersuche ausgewichen werden. Beispielsweise kann zuerst das Fehlermodell bezüglich der Pumpe und dann das Fehlermodell für das Ventil simuliert werden. Erst bei einer Nichtübereinstimmung der entsprechenden simulierten Messsignale mit dem tatsächlichen Messsignal für beispielsweis die Pumpe wird die Simulation des Ventils durchgeführt. Somit kann auch auf einer rechenkapazitätskritischen elektronischen Recheneinrichtung dennoch zuverlässig eine Fehlerursache bestimmt werden.

Ebenfalls vorteilhaft ist, wenn das digitale Zwillingsmodell mit einer virtuellen Steuerung bereitgestellt wird, wobei die virtuelle Steuerung einer realen Steuerung der Maschine entspricht. Insbesondere kann somit mit dem digitalen Zwillingsmodell auch eine entsprechende Steuerung (SPS) entsprechend simuliert werden. Insbesondere kann somit im Abhängigkeitsmodell jedes Eingangssignal der Steuerung berücksichtigt werden, von welchen Aktoren diese sich in einer Abhängigkeitsbeziehung befindet. Die Steuerung muss dabei das gleiche Steuerungsprojekt in der gleichen Art wie die Steuerung der realen Anlage abarbeiten. Die Steuerung kann aber als Hardware oder Software zur Verfügung stehen. Somit kann zuverlässig die Fehlerursachenbestimmung realisiert werden.

Es hat sich weiterhin als vorteilhaft erwiesen, wenn zeitlich vor einer Abweichung eine Einstellung des digitalen Zwillingsmodells gespeichert wird und für die Bestimmung der Fehlerursache dieses digitale Zwillingsmodell simuliert wird. Insbesondere kann somit beim digitalen Zwillingsmodell in den letzten Zeitschritt gesprungen werden, bei dem noch keine Abweichung vorlag. Für die entsprechend ausgewählte Komponente wird nun das Fehlermodell instanziiert. Das digitale Zwillingsmodell wird nun mit diesem Fehlermodell simuliert, und es wird geprüft, ob die festgestellte Abweichung zwischen realer Maschine und dem digitalen Zwillingsmodell mittels der Simulation nachgewiesen werden kann. Ist dies der Fall, so ist die Fehlerursache gefunden.

Ferner hat es sich als vorteilhaft erwiesen, wenn das digitale Zwillingsmodell und die Maschine zu einem gleichen Zeitpunkt gestartet werden. Insbesondere können somit das digitale Zwillingsmodell und die Maschine synchronisiert laufen, wodurch in Echtzeit eine Fehlerursachenbestimmung realisiert werden kann.

Weiterhin vorteilhaft ist, wenn das Abhängigkeitsmodell als Abhängigkeitsgraph bereitgestellt wird. Insbesondere kann der Abhängigkeitsgraph entsprechende Knoten aufweisen, bei welchen ein Messsignal entsprechend von den Komponenten abweichen kann. Die Komponenten können dabei auch auf unterschiedliche Messsignale ihre Auswirkungen haben, welche durch das Graphenmodell zuverlässig bereitgestellt werden können. Somit kann auf einfache Art und Weise das Abhängigkeitsmodell bereitgestellt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft ein computerlesbares Speichermedium mit dem Computerprogrammprodukt.

Ferner betrifft die Erfindung auch eine Überwachungsvorrichtung zum Bestimmen einer Fehlerursache in einer Maschine mit zumindest einer elektronischen Recheneinrichtung und einer Erfassungseinrichtung, wobei die Überwachungsvorrichtung zum Durchführen eines Verfahrens nach dem vorhergehenden Aspekt ausgebildet ist. Insbesondere wird das Verfahren mittels der Überwachungsvorrichtung durchgeführt.

Die Erfindung betrifft auch ein Maschinensystem mit einer Maschine und einer Überwachungsvorrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der Überwachungsvorrichtung sowie des Maschinensystems anzusehen. Die Überwachungsvorrichtung sowie das Maschinensystem weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DR_AM (englisch: "dynamic random access memory") oder statischer Speicher mit wahlfreiem Zugriff, SR_AM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: ein schematisches Blockschaltbild gemäß einer Ausführungsform einer Anordnung mit einer Maschine und einer Ausführungsform einer Überwachungsvorrichtung;
- FIG 2: eine schematische Ansicht eines Abhängigkeitsmodells; und
- FIG 3: ein schematische Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

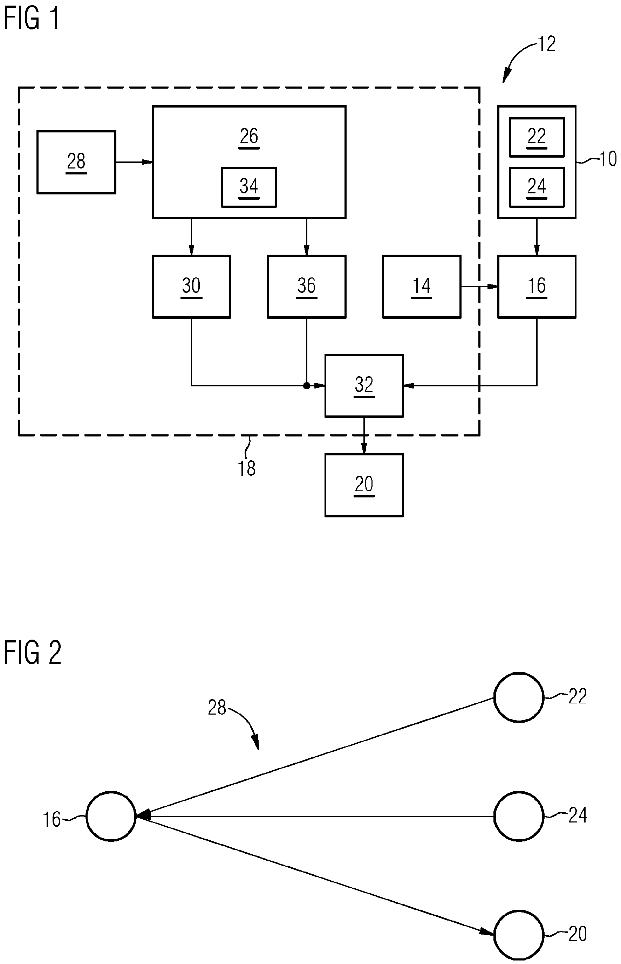

FIG 1 zeigt ein schematisches Blockschaltbild gemäß einer Ausführungsform einer Maschine 10 mit einer Ausführungsform einer Überwachungsvorrichtung 12. Die Überwachungsvorrichtung 12 weist im vorliegenden Ausführungsbeispiel zumindest eine Erfassungsvorrichtung 14 zum Erfassen eines Messsignals 16 sowie eine elektronische Recheneinrichtung 18 auf.

Insbesondere zeigt die FIG 1 die Überwachungsvorrichtung 12 zum Bestimmen einer Fehlerursache 20 der Maschine 10. Die Maschine 10 weist im vorliegenden Ausführungsbeispiel eine erste Komponente 22, beispielsweise in Form einer Pumpe, sowie eine zweite Komponente 24, beispielsweise in Form eines Ventils, auf. Es erfolgt das Bereitstellen eines digitalen Zwillingsmodells 26 der Maschine 10 mittels der elektronischen Recheneinrichtung 18. Es wird ein Abhängigkeitsmodell 28 von den jeweiligen Komponenten 22, 24 der Maschine 10 mittels der elektronischen Recheneinrichtung 18 bereitgestellt, wobei die Komponenten 22, 24 fehleranfällig sind. Es erfolgt das Erfassen eines Messsignals 16 der Maschine 10 mittels der Erfassungseinrichtung 14. Es wird das digitale Zwillingsmodell 26 mittels der elektronischen Recheneinrichtung 18 simuliert, und es erfolgt das Ausgeben eines virtuellen Messsignals 30 des digitalen Zwillingsmodells 26 mittels der elektronischen Recheneinrichtung 18. Das Messsignal 16 wird mit dem virtuellen Messsignal 30 mittels der elektronischen Recheneinrichtung 18, insbesondere in einem Vergleichsmodul 32, verglichen. Bei einer Abweichung des Messsignals 16 von dem virtuellen Messsignal 30 erfolgt ein Bestimmen der Fehlerursache 20 in Abhängigkeit von dem Abhängigkeitsmodell 28 mittels der elektronischen Recheneinrichtung 18.

Insbesondere ist dabei vorgesehen, dass die Maschine 10 und das digitale Zwillingsmodell 26 zeitgleich und parallel zueinander betrieben werden. Des Weiteren kann für eine jeweilige Komponente 22, 24 zumindest ein Fehlermodell 34 vorgegeben werden. Des Weiteren kann auch für eine jeweilige Komponente 22, 24 eine Vielzahl von Fehlermodellen 34 vorgegeben werden. Des Weiteren kann bei einer Abweichung das zumindest eine Fehlermodell 34 simuliert werden und ein davon abhängiges weiteres virtuelles Messsignal 36 mit dem Messsignal 16 verglichen werden und bei einer Übereinstimmung der Fehler auf Basis des Fehlermodells 34 bestimmt werden. Dabei können bei dem Abhängigkeitsmodell 28 Komponenten 22, 24 berücksichtigt werden, welche eine Auswirkung auf das Messsignal 16 haben.

Insbesondere kann ferner vorgesehen sein, dass das digitale Zwillingsmodell 26 und die Maschine 10 zu einem gleichen Zeitpunkt gestartet werden.

FIG 2 zeigt insbesondere eine schematische Ansicht eines Abhängigkeitsmodells 28. Im folgenden Ausführungsbeispiel ist insbesondere gezeigt, dass das Messsignal 16 beispielsweise abhängig von der Komponente 22 und der Komponente 24 ist. Es kann dann wiederum die Fehlerursache 20 in Abhängigkeit von des Messsignals 16 bestimmt werden. Insbesondere zeigt die FIG 2, dass das Abhängigkeitsmodell 28 als Abhängigkeitsgraph bereitgestellt wird.

Insbesondere schlägt somit die Erfindung vor, dass initial das Abhängigkeitsmodell 28 vorgegeben ist. Das Abhängigkeitsmodell 28 beschreibt für jedes Eingangssignal der Steuerung, von welchem Aktor dieses sich in einer Abhängigkeitsbeziehung befindet, wobei hierbei insbesondere das Messsignal 16 als Eingangssignal zu verzeichnen ist. Es wird das digitale Zwillingsmodell 26 der Maschine 10 aufgebaut. Das digitale Zwillingsmodell 26 verfügt dabei wie die reale Maschine 10 über eine Steuerung. Die Steuerung muss dabei das gleiche Steuerungsprojekt in der gleichen Art wie die Steuerung der realen Maschine 10 abarbeiten. Die Steuerung kann aber als Hardware oder Software zur Verfügung stehen. Die Physik der realen Maschine 10, insbesondere mechanische Bewegungen, Drücke, Kräfte oder dergleichen, werden insbesondere soweit notwendig realitätstreu über das digitale Zwillingsmodell 26 abgebildet. Für jede in dem Abhängigkeitsmodell 28 identifizierte Komponente 22, 24 werden die entsprechenden Fehlermodelle 34 im digitalen Zwillingsmodell 26 implementiert. Das heißt, die Komponente 22, 24 kann im "Gutzustand", also fehlerfreien Zustand" oder auch im Fehlerzustand simuliert werden. Die Komponente 22, 24 kann über mehrere Fehlerzustände verfügen. Diese müssen einzeln oder auch kombiniert instanziiert werden und insbesondere im Fehlermodell 34 hinterlegt werden. Das digitale Zwillingsmodell 26 muss derart moduliert sein, dass dieses in Echtzeit und synchron zur realen Maschine 10 läuft.

Insbesondere ist eine Funktionalität implementiert, sodass die reale Maschine 10 und das digitale Zwillingsmodell 26 synchron gestartet werden können. Ferner ist eine Funktionalität implementiert, die alle in der Steuerung verfügbaren Signale der realen Anlage, insbesondere der Maschine 10, in einem vorgebbaren Zeitraster kontinuierlich abspeichern. Das Abspeichern erfolgt über einen einstellbaren Zeitraum. Dann werden die gespeicherten Daten automatisch von neuen Werten überschrieben.

Ferner ist eine Funktionalität vorgegeben, die kontinuierlich alle Signale der Maschine 10 und des digitalen Zwillingsmodells 26 vergleicht. Im Fall einer Abweichung wird das digitale Zwillingsmodell 26 gestoppt, insbesondere eine Änderung des Betriebszustands der realen Maschine 10 ist auch möglich. Mittels des Abhängigkeitsmodells 28 wird analysiert, wovon das abweichende Messsignal 16 abhängig. Es kann eine oder mehrere Abhängigkeiten haben. Diese Abhängigkeiten werden systematisch mittels des digitalen Zwillingsmodells 26 durchgetestet. Insbesondere kann dann eine Abhängigkeit ausgewählt werden. Hierbei entspricht das digitale Zwillingsmodell 26 dem letzten Zeitschritt, in dem noch keine Abweichung vorlag. Für die ausgewählte Komponente 22, 24 wird nun das Fehlermodell 34 instanziiert. Das digitale Zwillingsmodell 26 wird nun mit diesem Fehlermodell 34 simuliert, und es wird geprüft, ob die festgestellte Abweichung zwischen der Maschine 10 und dem digitalen Zwillingsmodell 26 mittels der Simulation nachgewiesen werden kann. Ist dies der Fall, ist die Fehlerursache gefunden. Konnte die Abweichung nicht mittels der Simulation nachgewiesen werden, wird zunächst bei der Komponente 22, 24 weiter geprüft, sollten beispielsweise mehrere Fehlermodelle 34 vorliegen. Liefern alle diese Simulationen keine Übereinstimmung mit dem Fehler, so kann erneut in das Abhängigkeitsmodell 28 zurückgegangen werden und die weiteren Komponenten 22, 24 getestet werden.

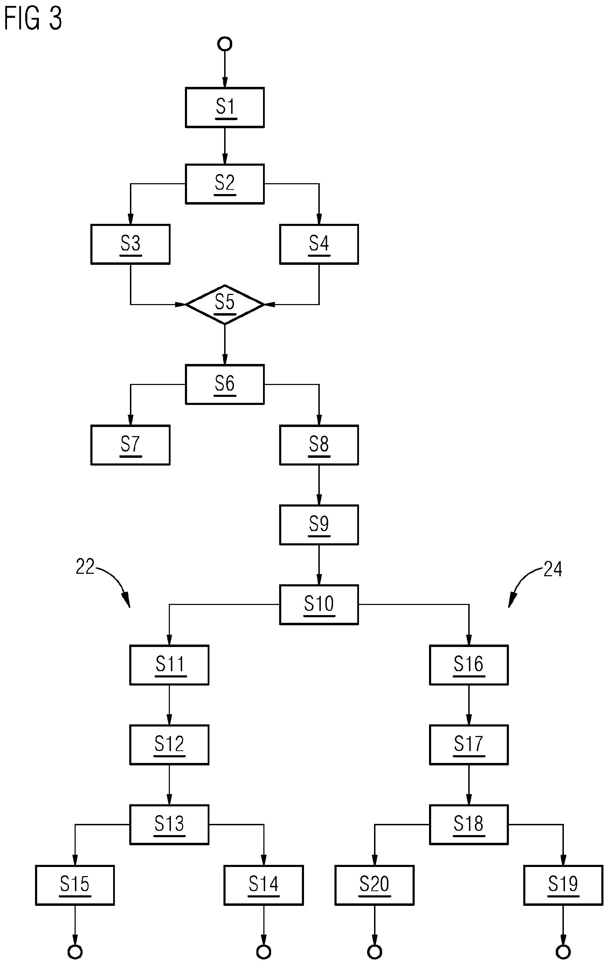

FIG 3 zeigt ein schematisches Ablaufdiagramm gemäß einer Ausführungsform des Verfahrens. In einem ersten Schritt S1 werden das digitale Zwillingsmodell 26 und die Maschine 10 parallel bereitgestellt. In einem zweiten Schritt S2 starten das digitale Zwillingsmodell 26 sowie die Maschine 10. In einem dritten Schritt S3 wird wiederum die Simulation durchgeführt, während in einem vierten Schritt S4 die Maschine 10 sich im Betrieb befindet. In einem fünften Schritt S5 erfolgen wiederum die Erfassung des Messsignals 16 sowie die Erzeugung des virtuellen Messsignals 30 und der Vergleich. In einem sechsten Schritt S6 wird überprüft, ob diese gleich sind. Sollten diese gleich sein, so wird in einen siebten Schritt S7 weitergegangen, wobei ein erneuter Überwachungszyklus mit dem ersten Schritt S1 beginnt. Sollten die Signale 16, 30 abweichen, so wird ein achter Schritt S8 durchgeführt. Im achten Schritt S8 wird überprüft, welche Abhängigkeiten im Abhängigkeitsmodell 28 vorhanden sind, welche das entsprechende Messsignal 16 beeinflussen könnten. In einem neunten Schritt S9 werden dann die entsprechenden Pfade im Abhängigkeitsmodell 28 geprüft. In einem zehnten Schritt S10 erfolgt dann die Aufteilung der Simulation in die unterschiedlichen Komponenten 22, 24. Beispielsweise wird die erste Komponente 22 in einem elften Schritt S11 geprüft, und es wird dabei insbesondere das Fehlermodell 34 verwendet. In einem zwölften Schritt S12 wird dann die virtuelle Steuerung insbesondere mit dem zeitlich letzten abgespeicherten digitalen Zwillingsmodell 26 ohne Abweichung durchexerziert. In einem dreizehnten Schritt S13 wird dann überprüft, ob das weitere virtuelle Messsignal 36 mit dem Messsignal 16 übereinstimmt. Sollte dies der Fall sein, so wird in einen vierzehnten Schritt S14 übergegangen, wobei dann die Fehlerursache 20 gefunden ist. Sollte dies nicht der Fall sein, so wird in einem fünfzehnten Schritt S15 bestimmt, dass es sich um den falschen Pfad handelt und somit nicht die geprüfte Komponente 22, 24 die Fehlerursache 20 ist. Ausgehend vom zehnten Schritt S10 kann wie vorliegend gezeigt parallel dazu ein sechszehnter Schritt S16 durchgeführt werden, welcher wiederum die zweite Komponente 24 mit dem Fehlermodell 16 bereitstellt. In einem siebzehnten Schritt S17 wird virtuell das weitere virtuelle Messsignal 36 mit den entsprechenden Steuerungen und dem letzten Modell vor der Abweichung durchgeprüft. In einem achtzehnten Schritt S18 erfolgt dann der Vergleich mit dem Messsignal 16 und dem weiteren virtuellen Messsignal 36. Sollte eine Übereinstimmung vorliegen, so kann in einem neunzehnten Schritt S19 bestimmt werden, dass es sich hierbei um die Fehlerursache 20 handelt. Sollten diese Messsignale nicht übereinstimmen, so kann in einem zwanzigsten Schritt S20 überprüft werden, dass es sich dabei nicht um die Fehlerursache 20 handelt.

Das in den FIG 1 bis 3 beschriebene Verfahren beziehungsweise die Überwachungsvorrichtung 12 ermöglicht es somit auch, Fehlerursachen 20 bei der Steuerung herauszufinden. Diese basieren dabei nun auf der automatisierten Auswertung der Maschine 10 über das digitale Zwillingsmodell 26. Das digitale Zwillingsmodell 26 kann dabei sehr schnell berechnet werden, sodass in kurzer Zeit viele Möglichkeiten der Fehlerursache 20 analysiert werden können. Die Simulation zeigt dabei den zeitlichen Verlauf. Somit kann anhand der Simulation qualitativ und quantitativ die Entstehung des Fehlers analysiert und nachgewiesen werden. Weiterhin können auch Teilnehmer, die keine eigene Diagnosemöglichkeit bieten, wie zum Beispiel ein Ventil, als Verursacher identifiziert werden.

Abhängig von der ermittelten Fehlerursache 20 oder einer jeweiligen ermittelten Fehlerursache 20 kann dann die jeweilige den Fehler verursachende Komponente, hier 22 oder 24, mittels der Überwachungseinrichtung 12 angesteuert und beispielsweise heruntergefahren, ausgeschaltet, besonders überwacht und/oder fehlerspezifisch gesteuert werden.

Ferner ist insbesondere ein Maschinensystem gezeigt, welches insbesondere zumindest mit der Überwachungsvorrichtung 12 und der Maschine 10 ausgebildet ist.

### Bezugszeichenliste

- 10: Maschine
- 12: Überwachungsvorrichtung
- 14: Erfassungseinrichtung
- 16: Messsignal
- 18: elektronische Recheneinrichtung
- 20: Fehlerursache
- 22: erste Komponente
- 24: zweite Komponente
- 26: digitales Zwillingsmodell
- 28: Abhängigkeitsmodell
- 30: virtuelles Messsignal
- 32: Vergleichseinrichtung
- 34: Fehlermodell
- 36: weiteres virtuelles Messsignal
- S1 bis S20: Schritte des Verfahrens

## Patentansprüche

1. Verfahren zum Bestimmen einer Fehlerursache (20) in einer Maschine (10) mittels einer Überwachungsvorrichtung (12), mit den Schritten:
- Bereitstellen eines digitalen Zwillingsmodells (26) der Maschine (10) mittels einer elektronischen Recheneinrichtung (18) der Überwachungsvorrichtung (12);
- Bereitstellen eines Abhängigkeitsmodells (28) von jeweiligen Komponenten (22, 24) der Maschine (10) mittels der elektronischen Recheneinrichtung (18), wobei die Komponenten (20, 22) fehleranfällig sind;
- Erfassen eines Messsignals (16) der Maschine (10) mittels einer Erfassungseinrichtung (14) der Überwachungsvorrichtung (12) ;
- Simulieren des digitalen Zwillingsmodells (26) mittels der elektronischen Recheneinrichtung (18) und Ausgeben eines virtuellen Messsignals (30) des digitalen Zwillingsmodells (26) mittels der elektronischen Recheneinrichtung (18);
- Vergleichen des Messsignals (16) mit dem virtuellen Messsignal (30) mittels der elektronischen Recheneinrichtung (18); und
- Bei einer Abweichung des Messsignals (16) mit dem virtuellen Messsignal (30), Bestimmen der Fehlerursache (20) in Abhängigkeit von dem Abhängigkeitsmodell (28) mittels der elektronischen Recheneinrichtung (18).

2. Verfahren nach Anspruch 1, **dadurch gekennzeichnet, dass** die Maschine (10) und das digitale Zwillingsmodell (26) zeitgleich und parallel zueinander betrieben werden.

3. Verfahren nach Anspruch 1 oder 2, **dadurch gekennzeichnet, dass**
für eine jeweilige Komponente (22, 24) zumindest ein Fehlermodell (34) vorgegeben wird.

4. Verfahren nach Anspruch 3, **dadurch gekennzeichnet, dass** für eine jeweilige Komponente (22, 24) eine Vielzahl von Fehlermodellen (34) vorgegeben wird.

5. Verfahren nach Anspruch 3 oder 4, **dadurch gekennzeichnet, dass**
bei der Abweichung das zumindest eine Fehlermodell (34) simuliert wird und ein davon abhängiges weiteres virtuelles Messsignal (36) erzeugt wird und das weitere virtuelle Messsignal (36) mit dem Messsignal (16) verglichen wird und bei einer Übereinstimmung der Fehler auf Basis des Fehlermodells (34) bestimmt wird.

6. Verfahren nach einem der vorhergehenden Ansprüche, **dadurch gekennzeichnet, dass**
beim Abhängigkeitsmodell (28) Komponenten (22, 24) berücksichtigt werden, welche eine Auswirkung auf das Messsignal (16) haben.

7. Verfahren nach einem der vorhergehenden Ansprüche, **dadurch gekennzeichnet, dass**
bei einer Vielzahl von Komponenten (22, 24) eine parallele Fehlersuche auf Basis einer parallelen Simulation durchgeführt wird.

8. Verfahren nach einem der Ansprüche 1 bis 6, **dadurch gekennzeichnet, dass**
bei einer Vielzahl von Komponenten (22, 24) eine sequentielle Fehlersuche auf Basis einer sequentiellen Simulation durchgeführt wird.

9. Verfahren nach einem der vorhergehenden Ansprüche, **dadurch gekennzeichnet, dass**
das digitale Zwillingsmodell (26) mit einer virtuellen Steuerung bereitgestellt wird, wobei die virtuelle Steuerung einer realen Steuerung der Maschine entspricht.

10. Verfahren nach einem der vorhergehenden Ansprüche, **dadurch gekennzeichnet, dass**
zeitlich vor einer Abweichung eine Einstellung des digitalen Zwillingsmodells (26) gespeichert wird und für die Bestimmung der Fehlerursache dieses digitale Zwillingsmodell (26) simuliert wird.

11. Verfahren nach einem der vorhergehenden Ansprüche, **dadurch gekennzeichnet, dass**
das digitale Zwillingsmodell (26) und die Maschine (10) zu einem gleichen Zeitpunkt gestartet werden.

12. Verfahren nach einem der vorhergehenden Ansprüche, **dadurch gekennzeichnet, dass**
das Abhängigkeitsmodell (28) als Abhängigkeitsgraph bereitgestellt wird.

13. Computerprogrammprodukt mit Programmcodemitteln, welche eine elektronische Recheneinrichtung (18) dazu veranlassen, wenn die Programmcodemittel von der elektronischen Recheneinrichtung (18) abgearbeitet werden, ein Verfahren nach einem der Ansprüche 1 bis 12 durchzuführen.

14. Computerlesbares Speichermedium mit einem Computerprogrammprodukt nach Anspruch 13.

15. Überwachungsvorrichtung (12) zum Bestimmen einer Fehlerursache (20) in einer Maschine (10) mit zumindest einer elektronischen Recheneinrichtung (18) und einer Erfassungseinrichtung (14) , wobei die Überwachungsvorrichtung (12) zum Durchführen eines Verfahrens nach einem der Ansprüche 1 bis 12 ausgebildet ist.
